# EUROPÄISCHE PATENTSCHRIFT

(11) **EP 3 094 019 B1**
(45) Veröffentlichungstag und Bekanntmachung des Hinweises auf die Patenterteilung: **07.03.2018**
(21) Anmeldenummer: 15174316.8
(22) Anmeldetag: 29.06.2015
(51) Int. Cl.: H04B 17/00, H04B 17/391, H04W 24/06, H04W 76/02, H04W 92/18

(54) **HF-TESTGERÄT UND VERFAHREN ZUM TESTEN EINES D2D-FÄHIGEN MOBILFUNKENDGERÄTES**
RF TEST DEVICE AND METHOD FOR TESTING A D2D-CAPABLE MOBILE RADIO TERMINAL
DISPOSITIF DE TEST HF ET PROCÉDÉ D'ESSAI D'UN TERMINAL RADIO MOBILE D2D

(30) Priorität: 11.05.2015 EP 15167133
(43) Veröffentlichungstag der Anmeldung: 16.11.2016
(73) Patentinhaber: Rohde & Schwarz GmbH & Co. KG, 81671 München (DE)
(72) Erfinder: Ohlendorf, Rainer, 82541 Münsing OT Wimpasing (DE)
(74) Vertreter: Isarpatent

(56) Entgegenhaltungen:
- WO-A1-2012/082024
- WO-A2-2010/093999
- DE-A1-102008 055 759
- GB-A- 2 440 190
- SVEDJENAS PATRIK ET AL: "OTA device sensitivity in the presence of interference measured in a reverberation chamber", 2014 INTERNATIONAL SYMPOSIUM ON ELECTROMAGNETIC COMPATIBILITY, IEEE, 1. September 2014 (2014-09-01), Seiten 328-331, XP032665538, DOI: 10.1109/EMCEUROPE.2014.6930926 [gefunden am 2014-10-20]
- BUM-GON CHOI ET AL: "Development of a System-Level Simulator for Evaluating Performance of Device-to-Device Communication Underlaying LTE-Advanced Networks", 2012 FOURTH INTERNATIONAL CONFERENCE ON COMPUTATIONAL INTELLIGENCE, MODELLING AND SIMULATION (CIMSIM 2012); 25-27 SEPT. 2012; KUANTAN, MALAYSIA, IEEE COMPUTER SOCIETY, LOS ALAMITOS, CA, USA, 25. September 2012 (2012-09-25), Seiten 330-335, XP032265944, DOI: 10.1109/CIMSIM.2012.24 ISBN: 978-1-4673-3113-5

## Beschreibung

### GEBIET DER ERFINDUNG

Die vorliegende Erfindung betrifft ein HF-Testgerät und ein Verfahren zum Testen von D2D-fähigen Mobilfunkendgeräten.

### TECHNISCHER HINTERGRUND

Die vorliegende Erfindung befindet sich im Umfeld der so genannten Device-to-Device (D2D) Kommunikation. D2D ist ein Funkstandard in LTE (Long Term Evolution), der eine direkte Kommunikation zwischen verschiedenen Mobilfunkendgeräten unter Umgehung einer Basisstation und somit eines entsprechenden Funknetzes erlaubt. Im LTE-Standard werden diese Mobilfunkendgeräte auch als User Equipment (UE) und die direkte Kommunikationsverbindung zwischen Mobilfunkendgeräten als Sidelink bezeichnet. Die D2D Kommunikation wird als ein Mittel angesehen, um Peer-to-Peer (P2P)-Dienste zwischen Mobilfunkendgeräten zu erleichtern, infrastrukturlose Kommunikation in Notsituationen zu erleichtern und die Netzkapazität durch Auslagerung von Daten-Traffic von dem Funkkommunikationsnetz zu verbessern. Die WO 2012/082024 A1 beschreibt ein Beispiel einer solchen D2D Kommunikation. Das Dokument WO 2010/093999 A2 offenbart ein HF-Testgerät zum Testen eines Mobilfunkendgeräts. Eine Emulationseinrichtung emuliert die Kommunikation mehrerer Basisstationen, BSn, mit dem Mobilfunkendgerät. Die Emulationseinrichtung ist dazu ausgebildet, eine der Anzahl der BSn entsprechende Anzahl an Sendekanälen zu emulieren, indem für jeden Sendekanal anhand eines vorgegebenen Kanalmodells ein dem jeweiligen Sendekanal spezifisches HF-Signal erzeugt wird. Eine Verknüpfungseinrichtung ("RF combiner") ist dazu ausgebildet, die erzeugten HF-Signale miteinander zu verknüpfen. Über eine Kommunikationsschnittstelle ist das HF-Testgerät mit dem zu testenden Mobilfunkendgerät koppelbar und das Empfangssignal an das zu testende Mobilfunkendgerät aussendbar. Nachstehend werden die vorliegende Erfindung sowie die ihr zugrunde liegenden Problems auf der Grundlage der D2D-Kommunikation erläutert, jedoch ohne die Erfindung auf diese Art von Mobilfunkendgeräten sowie den LTE-Standard zu beschränken.

Aufgrund der steigenden Funktionalität moderner Mobilfunkendgeräte kommt deren Test eine immer größere Bedeutung zu. Testet man ein Mobilfunkendgerät im realen Mobilfunknetz, sind die Bedingungen oft nicht reproduzierbar, da sich Randbedingungen wie Zellleistung, Timing, Auslastung, etc. laufend ändern können. Daher existieren eigens zum Testen von Mobilfunkendgeräten vorgesehene Testgeräte. Diese zu testenden Mobilfunkendgeräte werden allgemein auch als Device Under Test oder kurz als DUT bezeichnet. Während aktuelle Testgeräte die Funktionalität von Basisstationen emulieren können, müssen zukünftige Testgeräte zusätzlich auch die D2D Kommunikationseigenschaften von Mobilfunkendgeräten testen können.

D2D steht zwar für eine Kommunikation zwischen zwei Mobilfunkendgeräten. Jedoch werden in der realen Anwendung auch Situationen auftreten, bei denen ein Mobilfunkendgerät von mehreren Mobilfunkendgeräten über jeweilige D2D Kommunikationsverbindungen angesprochen wird. In diesem Fall konfiguriert die Basisstation des Mobilfunknetzes für die jeweiligen sendenden Mobilfunkendgeräte gemeinsame Senderessourcen, von denen diese einzelne Senderessourcen zufällig auswählen. Desweiteren werden die entsprechenden Senderessourcen dem empfangenden Mobilfunkendgerät als Empfangsressource mitgeteilt. Da die Auswahl der Senderessourcen von den einzelnen Mobilfunkendgeräten im Zeit- und Frequenzbereich per Zufall vorgenommen wird, kann es dazu kommen, dass zumindest zwei sendende Mobilfunkendgeräte die Daten jeweils auf derselben Sendefrequenz und zur selben Zeit, d.h. im selben Zeitschlitz, zu dem empfangenden Mobilfunkendgerät senden. Damit kommt es aber zu Interferenzen der gesendeten Datensignale. Die empfangenden Mobilfunkendgeräte müssen auch bei diesem Scenario ordnungsgemäß funktionieren, was durch entsprechende Testscenarios zu verifizieren ist. Es besteht somit der Bedarf, zu testende Mobilfunkendgeräte auch für den Fall von auftretenden interferierenden Funkübertragungen ordnungsgemäß testen zu können.

### ZUSAMMENFASSUNG DER ERFINDUNG

Vor diesem Hintergrund liegt der vorliegenden Erfindung die Aufgabe zugrunde, das Testen von Mobilfunkendgeräten zu verbessern.

Erfindungsgemäß wird diese Aufgabe durch ein Testgerät mit den Merkmalen des Patentanspruchs 1 und/oder durch ein Verfahren mit den Merkmalen des Patentanspruchs 13 gelöst. Demgemäß ist vorgesehen:
- Ein HF-Testgerät zum Testen eines D2D-fähigen Mobilfunkendgerätes, mit einer Emulationseinrichtung zur Emulation der D2D-Funktion mehrerer Mobilfunkendgeräte, welche dazu ausgebildet ist, eine der Anzahl der Mobilfunkendgeräte entsprechende Anzahl an voneinander unabhängigen Sendekanälen zu emulieren, indem für jeden Sendekanal anhand eines vorgegebenen Kanalmodells ein dem jeweiligen Sendekanal spezifisches Basisband-Datensignal erzeugt wird, einer Verknüpfungseinrichtung, die dazu ausgebildet ist, die erzeugten Basisband-Datensignale miteinander zu verknüpfen, einer Umwandlungseinrichtung, die dazu ausgebildet ist, ein Empfangssignal für ein zu testendes Mobilfunkendgerät zu erzeugen, indem das verknüpfte Basisband-Datensignal aus dem Frequenzbereich in den Zeitbereich umgewandelt wird, einer Kommunikationsschnittstelle, über welche das HF-Testgerät mit dem zu testenden Mobilfunkendgerät koppelbar ist und über welche das Empfangssignal an das zu testende Mobilfunkendgerät aussendbar ist.
- Ein Verfahren zum Testen eines Mobilfunkendgerätes mittels eines Testgeräts, insbesondere mittels eines erfindungsgemäßen Testgeräts, mit den Schritten: Emulieren eines ersten Sendekanals für eine D2D-Kommunikationsverbindung durch Erzeugen eines dem ersten Sendekanal spezifischen ersten Basisband-Datensignals anhand eines ersten vorgegebenen Kanalmodells; Emulieren mindestens eines zweiten, von dem ersten Sendekanal verschiedenen Sendekanals für eine D2D-Kommunikationsverbindung durch Erzeugen eines dem zweiten Sendekanal spezifischen zweiten Basisband-Datensignals anhand eines zweiten vorgegebenen Kanalmodells; Miteinander Verknüpfen der erzeugten ersten und zweiten Basisband-Datensignale; Umwandeln des verknüpften Basisband-Datensignals aus dem Frequenzbereich in den Zeitbereich zur Erzeugung eines Empfangssignals für ein zu testendes Mobilfunkendgerät; Aussenden des erzeugten Empfangssignals an das zu testende Mobilfunkendgerät.

Gemäß der vorliegenden Erfindung wird ein Testgerät bereitgestellt, welches die D2D Kommunikationsfähigkeit zumindest zweier Mobilfunkendgeräte emuliert. Damit lassen sich interferierende Funkübertragungen, die aufgrund zufällig ausgewählter Frequenzressourcen auftreten können, nachbilden und deren Auswirkung bei einem zu testenden Mobilfunkendgerät somit testen.

Für den Test werden für jeden Sendekanal jeweils Basisband-Datensignale im Frequenzbereich erzeugt. Diese Basisband-Datensignale beinhalten bereits die Auswirkungen eines jeweiligen Sendekanals auf ein nicht-verzerrtes Datensignal. Für die Erzeugung der Basisband-Datensignale wird ein geeignetes Kanalmodell eines Sendekanals emuliert, welches dem zu sendenden Datensignal eine Verzerrung entsprechend dem Kanalmodell aufprägt. Man erhält damit für jeden Sendekanal jeweils ein Basisband-Datensignal. Anschließend müssen nur noch die verschiedenen Basisband-Datensignale miteinander verknüpft werden, z.B. durch komplexe Multiplikation, und in den Zeitbereich transformiert werden. Man emuliert auf diese Weise ein Empfangssignal für ein zu testendes Mobilfunkendgerät, wie es unter Berücksichtigung von mehreren Sendekanälen und der damit einhergehenden Kanalverzerrung entsteht.

Dabei liegt der Erfindung folgende Überlegung zu Grunde:
Ein Sendekanal kann in jedem Zeitschlitz für jeden Unterträger als konstanter komplexer Faktor angesehen werden, der modellmäßig beschreibt, mit welcher Amplitude (oder Dämpfung) und Phasenlage ein vom sendenden Mobilfunkendgerät zu sendendes Datensignal am Empfänger ankommt. Je nachdem, wie sich die beiden gewählten Faktoren (Amplitude und Phasenlage) zueinander verhalten, ist das kombinierte Empfangssignal, welches am empfangenden und somit zu testenden Mobilfunkendgerät ankommt, für eine der beiden interferierenden Übertragungen dekodierbar oder auch nicht.

Lässt man zu, dass sich die beiden komplexen Faktoren (Amplitude, Phasenlage) im Lauf der Zeit ändern, kann es sein, das unterschiedliche Übertragungen derselben Sequenz für das zu testende Mobilfunkendgerät in verschiedenen Zeitpunkten dekodierbar wird. Hat das zu testende Mobilfunkendgerät bereits z.B. durch vorangegangene Übertragungen Kenntnis vom Inhalt eines zu sendenden Datensignals erhalten, besteht für das sendende Mobilfunkendgerät die Möglichkeit, eine Interferenz vom Empfangssignal in einem späteren Zeitpunkt zu subtrahieren und damit die Datenblöcke von allen sendenden Mobilfunkendgeräten nacheinander zu empfangen (so genannte Advanced Receiver/Interference Cancellation).

Durch die Annäherung der Sendekanäle durch eine komplexe Multiplikation am Ende der Verarbeitungskette des Basisband-Datensignals kann im Testgerät auf vorteilhafte Weise eine aufwändige Fading-Kanalsimulation im Zeitbereich und eine Addition der zu sendenden HF-Datensignale unterschiedlicher Mobilfunkendgeräte vor Erreichen des zu testenden Mobilfunkendgeräts eingespart werden.

Außerdem können Allokationen begrenzter Größe, wie sie insbesondere bei so genannten Sidelink Direct Discovery vorliegen, ohne Weiteres nacheinander auf derselben Hardware im Zeitmultiplex berechnet werden. Eine eigens dafür vorgesehene Kontrollsteuereinrichtung stellt hierbei sicher, dass die komplexen Faktoren des Sendekanals für die einzelnen Allokationen jeweils dem konfigurierten Kanalmodell zum Zeitpunkt der Aussendung des entsprechenden Mobilfunkendgerätes entsprechen. Auf diese Weise kann die Leistungsfähigkeit der Dekodierung (decoding performance) des empfangenden Mobilfunkendgerätes zuverlässig, reproduzierbar und kostengünstig in einem Testgerät implementiert werden.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung weist die Emulationseinrichtung einen Signalgenerator und einen Kanalsimulator auf. Der Signalgenerator ist dazu ausgebildet, für jeden Sendekanal ein unterschiedliches Datensignal zu erzeugen. Vorzugsweise ist der Kanalsimulator dazu ausgebildet, je Sendekanal ein vorgegebenes unterschiedliches Kanalmodell zu verwenden, indem der Kanalsimulator jedem Datensignal eines jeweiligen Sendekanals eine vorgegebene, dem jeweiligen Sendekanal spezifische Kanalverzerrung aufprägt. Vorzugsweise kann auch ein einziger Sendesignalgenerator und/oder ein einziger Kanalsimulator für mehrere Sendekanäle verwendet werden.

In einer besonders bevorzugten Ausgestaltung ist der Signalgenerator als Protokolltestgerät oder kurz Protokolltester ausgebildet. Das Protokolltestgerät nimmt eine einem vorgegebenen Protokollstapel entsprechende Codierung der zu sendenden Daten vor.

Gemäß einer typischen Weiterbildung ist der Kanalsimulator dazu ausgelegt, die Eigenschaften eines Sendekanals nachzubilden, indem es zur Erzeugung des Sendekanal-spezifischen Basisband-Datensignals das zu sendende Datensignal entsprechend dem vorgegebenen Kanalmodell verändert. Die Veränderung des Datensignals erfolgt bezüglich dessen Amplitude und/oder der Phase. Auf diese Weise ist es möglich, zu Testzwecken einen Sendekanal zu emulieren, anhand dessen ein zu testendes Mobilfunkendgerät gezielt getestet werden kann.

Eine bevorzugte Ausgestaltung der Erfindung sieht vor, dass der Kanalsimulator zur Erzeugung des Sendekanal-spezifischen Basisband-Datensignals und somit für die Emulation des Sendekanals konstante Filterkoeffizienten verwendet. Dies ist insbesondere im Entwicklungsstadium von Mobilfunkendgeräten von Vorteil, in welchem zunächst auf die grundsätzliche Funktionalität eines Mobilfunkendgerät hin getestet wird.

Eine besonders bevorzugte, alternative Ausgestaltung der Erfindung sieht vor, dass der Kanalsimulator zur Erzeugung des Sendekanal-spezifischen Basisband-Datensignals und somit für die Emulation des Sendekanals variable Filterkoeffizienten verwendet. Die Verwendung von variablen Filterkoeffizienten trägt dem Umstand eines sich verändernden Sendekanals Rechnung, wie er zum Beispiel bei einer Ortsveränderung eines Mobilfunkendgeräts auftritt. Diese alternative Ausgestaltung wird vorzugsweise nach einem Entwicklungsprozess verwendet, um die Funktionalität eines zu testenden Mobilfunkendgeräts in einer realen Umgebung getestet. Vorzugsweise ist der Kanalsimulator dazu ausgebildet, zur Simulation einer vorgegebenen Kanalverzerrung für jeden Sendekanal unterschiedliche Kanalkoeffizienten zu verwenden.

Eine bevorzugte Ausgestaltung der Erfindung sieht vor, dass die Emulationseinrichtung das Sendekanal-spezifische Basisband-Datensignal durch komplexe Multiplikation des zu sendenden Datensignals mit den Filterkoeffizienten des Kanalmodells berechnet.

In einer Ausgestaltung ist die Emulationseinrichtung ausgebildet, zu übertragende Daten bereitzustellen, den zu übertragenden Daten eine Mehrzahl an Trägerfrequenzen und Kodierungsparameter je Sendekanal zuzuweisen, eine Mehrzahl von modulierten Trägerdatensignalen entsprechend den zugewiesenen Trägerfrequenzen und Kodierungsparametern zu erzeugen, und zumindest eines der modulierten Trägerdatensignalen mittels eines vorgegebenen frequenzselektiven Kanalmodells zu verzerren.

In einer besonders bevorzugten Ausgestaltung ist die Emulationseinrichtung dazu ausgebildet, verschiedene Testszenarien nachzubilden. Solche Testszenarien können z.B. eine einem zu sendenden Datensignal überlagerte Störung, Fading und/oder Jitter sein. Denkbar wären darüber hinaus auch noch weitere Testszenarien.

Eine bevorzugte Ausgestaltung der Erfindung sieht vor, dass die Umwandlungseinrichtung dazu ausgebildet ist, zur Bildung des Empfangssignals für das zu testende Mobilfunkendgerät eine IFFT-Transformation an dem verknüpften Basisband-Datensignal durchzuführen. Mit der IFFT wird das Datensignal aus dem Frequenzbereich in den Zeitbereich transformiert. Für den Test wird auf diese Weise ein Empfangssignal im Zeitbereich emuliert, wie es im normalen Betrieb von einem zu testenden Mobilfunkendgerät normalerweise über die Luftschnittstellen empfangen wird.

Gemäß einer typischen Weiterbildung ist die Kommunikationsschnittstelle dazu ausgebildet, eine festverdrahtete Kommunikationsverbindung zu dem zu testenden Mobilfunkendgerät aufzubauen. Auf diese Weise wird verhindert, dass das vom Testgerät erzeugte und dem zu testenden Mobilfunkendgerät zuzuführende Empfangssignal durch einen weiteren Kanal, der z.B. durch eine Luftschnittstelle gebildet wird, gestört oder auf andere, nicht nachvollziehbare Weise verändert wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Scenario für eine D2D-Kommunikation;
- Fig. 2: ein erstes, allgemeines Ausführungsbeispiel eines erfindungsgemäßen Testgerätes zum Testen der D2D Kommunikationsfähigkeit eines Mobilfunkendgeräts;
- Fig. 3: ein weiteres, bevorzugtes Ausführungsbeispiel eines erfindungsgemäßen Testgerätes zum Testen der D2D Kommunikationsfähigkeit eines Mobilfunkendgeräts;
- Fig. 4: anhand eines Ablaufdiagramms den Ablauf eines erfindungsgemäßen Verfahrens zum Testen der D2D Kommunikationsfähigkeit eines Mobilfunkendgeräts.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.
Die Elemente der Zeichnungen sind nicht notwendigerweise maßstabsgetreu zueinander gezeigt.

In den Figuren der Zeichnung sind gleiche, funktionsgleiche und gleich wirkende Elemente und Komponenten - sofern nichts Anderes ausführt ist - jeweils mit denselben Bezugszeichen versehen.

### BESCHREIBUNG VON AUSFÜHRUNGSBEISPIELEN

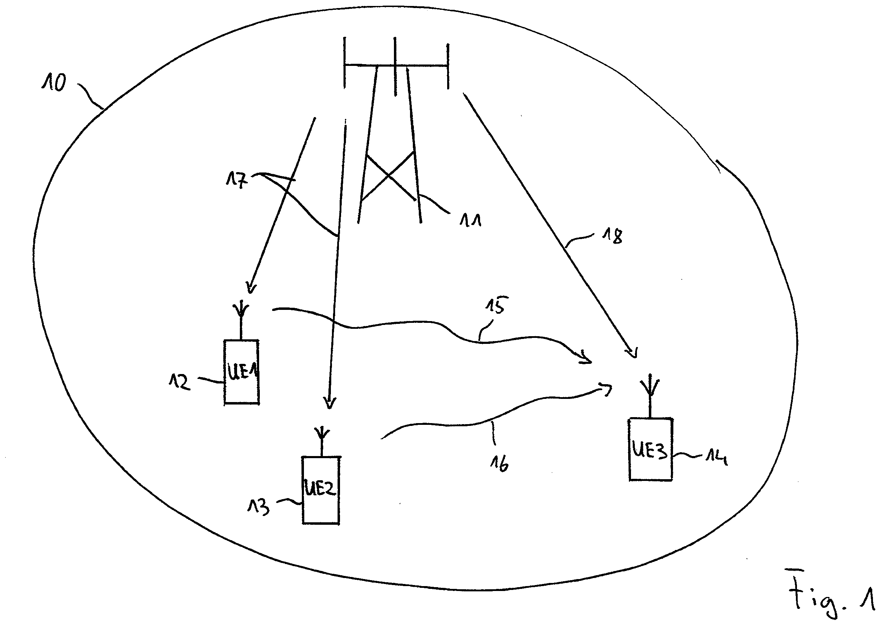

Fig. 1 zeigt zunächst anhand eines Blockschaltbildes ein beispielhaftes Scenario für eine D2D-Kommunikation von Mobilfunkendgeräten. Hier ist eine Mobilfunkzelle 10 dargestellt, welche durch eine Basisstation 11, auch als eNodeB bezeichnet, gebildet wird. Innerhalb dieser Mobilfunkzelle 10 sind im gezeigten Beispiel drei Mobilfunkendgeräte 12, 13, 14 gezeigt, die auch als UEx bezeichnet sind. Dabei ist mit UE3 das zu testende Mobilfunkendgerät 14 bezeichnet.

Die Basisstation 11 konfiguriert den jeweiligen sendenden Mobilfunkendgeräte 12, 13 über die Verbindungen 17 einzelne Senderessourcen (in LTE: SL-DiscTxPoolList), aus denen die Mobilfunkendgeräte 12, 13 Ressourcen zufällig auswählen, um Daten auf dem so genannten Sidelink in ihre Umgebung auszustrahlen. Desweiteren werden entsprechende Senderessourcen dem empfangenden Mobilfunkendgerät 14 über die Verbindung 18 als Empfangsressource (in LTE: SL-DiscRxPoolList) mitgeteilt. Die einzelnen. Sende- und Empfangsressourcen beinhalten eine Teilmenge der Zeitschlitze und die Bandbreite im Frequenzbereich, welche der jeweiligen, durch die Basisstation 11 definierte Funkzelle 10 zugeordnet ist. Je nach Konfiguration und Protokoll der Datenkommunikation werden Sendedaten von den einzelnen sendenden Mobilfunkendgeräten 12, 13 wiederum nur in einer Teilmenge der vorkonfigurierten Ressourcen gesendet.

Jedes sendende Mobilfunkendgerät 12, 13 sendet für die D2D Kommunikation die zu sendenden Daten über einen so genannten Sidelink 15, 16 direkt zu dem empfangenden Mobilfunkendgerät 15.

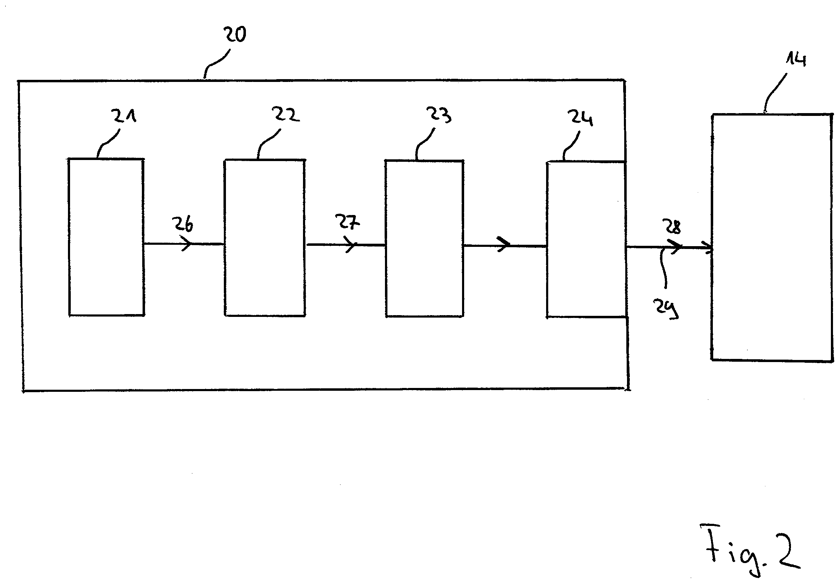

Fig. 2 zeigt ein erstes, allgemeines Ausführungsbeispiel eines erfindungsgemäßen HF-Testgerätes zum Testen der D2D Kommunikationsfähigkeit eines Mobilfunkendgeräts. In Fig. 2 ist dabei mit Bezugszeichen 20 das erfindungsgemäße Testgerät bezeichnet. Dieses Testgerät 20 stellt einen HF-Messplatz dar, welcher auch als HF-Tester oder Mobilfunktester bezeichnet werden kann.

Das Testgerät 20 steht mit dem zu testenden Mobilfunkendgerät 14 (oder DUT = Device under Test) in kommunikativer Verbindung. Der dabei verwendete Kommunikationsstandard wird typischerweise von dem Mobilfunkendgerät 14 vorgegeben. Im vorliegenden Beispiel sei der LTE Standard vorgesehen. Die Kommunikationsverbindung zwischen dem Testgerät 20 und dem Mobilfunkendgerät 14 ermöglicht einen bidirektionalen Signalaustausch zwischen den beiden Komponenten des Testsystems.

Das HF-Testgerät 20 weist eine Emulationseinrichtung 21, eine Verknüpfungseinrichtung 22, eine Umwandlungseinrichtung 23 sowie eine Kommunikationsschnittstelle 24 auf.

Die Emulationseinrichtung 21 ist dazu ausgebildet, mehrere, hier nicht gezeigte Mobilfunkendgeräte zu emulieren und dabei insbesondere die D2D-Funktion dieser Mobilfunkendgeräte nachzubilden. Hierzu emuliert die Emulationseinrichtung 21 mehrere voneinander unabhängige Sendekanäle, d.h. für jedes sendendes Mobilfunkgerät jeweils einen Sendekanal. Somit wird für jeden Sendekanal ein dem jeweiligen Sendekanal spezifisches Basisband-Datensignal 26 erzeugt. Das Erzeugen der Basisband-Datensignale 26 erfolgt jeweils anhand eines vorgegebenen Kanalmodells, welches in einem Kanalsimulator der Emulationseinrichtung 21 hinterlegt ist.

Die Verknüpfungseinrichtung 22 ist dazu ausgebildet, die von der Emulationseinrichtung 21 erzeugten Basisband-Datensignale 26 miteinander zu verknüpfen, um ein verknüpftes Basisband-Datensignal 27 zu erzeugen.

Die Umwandlungseinrichtung 23 ist dazu ausgebildet, aus dem verknüpften Basisband-Datensignal 27 ein Empfangssignal 28 für das zu testende Mobilfunkendgerät 14 zu erzeugen, indem das verknüpfte Basisband-Datensignal 27 aus dem Frequenzbereich in den Zeitbereich umgewandelt wird.

Über die Kommunikationsschnittstelle 24 ist das HF-Testgerät 20 mit dem zu testenden Mobilfunkendgerät 14 gekoppelt. Über diese Kommunikationsschnittstelle 24, welche vorzugsweise eine festverdrahtete Koaxialverbindung 29 beinhaltet, wird das Empfangssignal 28 an das zu testende Mobilfunkendgerät 14 gesendet und von diesem empfangen.

Darüber hinaus wäre es auch denkbar, dass zwischen dem Testgerät 20 und dem zu testenden Mobilfunkendgerät 14 zu Testzwecken eine drahtlose Luftschnittstelle vorhanden ist.

Das Testgerät 20 ist sodann in an sich bekannter Weise in der Lage, die D2D Funktionalität dieses zu testenden Mobilfunkendgerät 14 zu testen.

Die Elemente des Testgerätes 20, dabei insbesondere die Emulationseinrichtung 21, Verknüpfungseinrichtung 22, Umwandlungseinrichtung 23 und Kommunikationsschnittstelle 24, können teilweise oder vollständig in einer programmgesteuerten Einrichtung, wie etwa einem Mikroprozessor, Mikrocontroller, und dergleichen, implementiert sein.

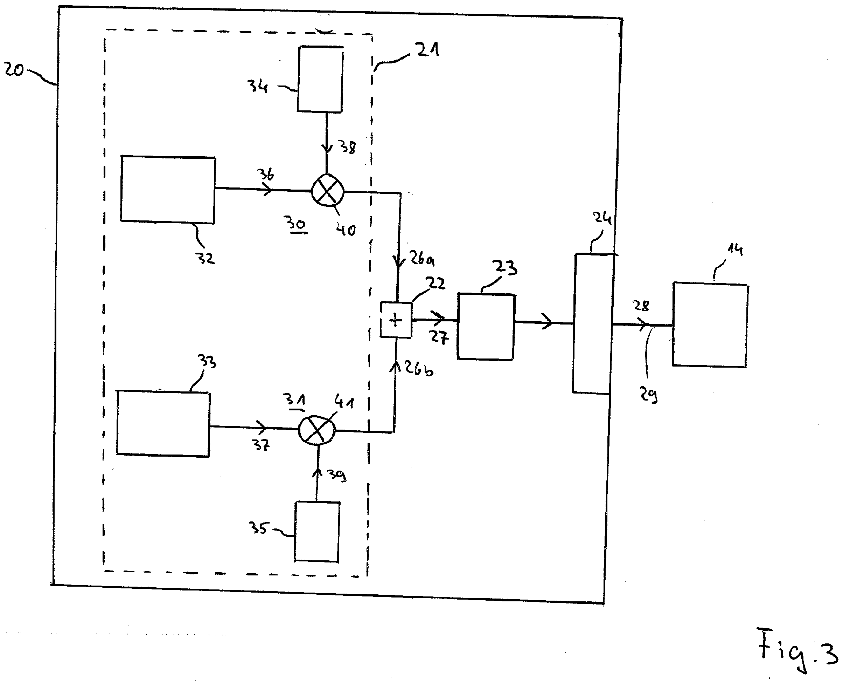

Fig. 3 zeigt ein weiteres, bevorzugtes Ausführungsbeispiel eines erfindungsgemäßen Testgerätes zum Testen der D2D Kommunikationsfähigkeit eines Mobilfunkendgeräts.

Die Emulationseinrichtung 21 ist hier dazu ausgebildet, zwei Sendekanäle 30, 31 nachzubilden. Hierzu weist die Emulationseinrichtung 21 einen Signalgenerator 32, 33 und einen Kanalsimulator 34, 35 auf.

Ein Signalgenerator 32, 33 ist dazu ausgebildet, für jeden Sendekanal 30, 31 ein Datensignal 36, 37 zu erzeugen.

Der Kanalsimulator 34, 35 dazu ausgebildet ist, jedem Datensignal 36, 37 eines jeweiligen Sendekanals 30, 31 eine vorgegebene, dem jeweiligen Sendekanal-spezifische Kanalverzerrung 38, 39 aufzuprägen. Dies geschieht typischerweise durch komplexe Multiplikation der Kanalverzerrungen 38, 39 mit den jeweiligen Datensignalen 36, 37 in den Multiplikationseinrichtungen 40, 41. Daraus ergeben sich die Basisband-Datensignale 26a, 26b. Aus diesen Basisband-Datensignalen 26a, 26b wird z.B. in der Verknüpfungseinrichtung 22 durch Addition das verknüpfte Basisband-Datensignal 27 erzeugt.

Die Signalgeneratoren 32, 33 sowie die Kanalsimulatoren 34, 35 können durch eine programmgesteuerte Einrichtung, wie etwa einem Mikrocontroller oder Mikroprozessor, realisiert sein. Denkbar wäre auch, dass lediglich ein einziger Signalgenerator und/oder lediglich ein einziger Kanalsimulator für mehrere oder alle Sendekanäle 30, 31 verwendet wird.

Das Berechnen der Basisband-Datensignale 26a, 26b zu Testzwecken ist z.B. in der DE 10 2008 055 759 A1 beschrieben. Dort wird beschrieben, wie die Kanalverzerrung einer Funkübertragung in einem LTE Mobilfunksystem zu Testzwecken im Frequenzbereich mit Hilfe einer komplexen Multiplikation vor der Erzeugung des Zeitbereichssignals modelliert werden kann. Dasselbe Modell wird bei der vorliegenden Erfindung durch die Emulationseinrichtung 21 zur Emulation voneinander unabhängiger Sendekanäle verwendet.

Im Mobilfunkstandard LTE der 3GPP Standardisierung wird das OFDM (Orthogonal Frequency Division Multiplexing) Modulationsverfahren verwendet. Dabei werden Nutzinformationen mit hoher Datenrate auf mehrere Teildatenströme mit niedrigerer Datenrate aufgeteilt. Diese Teildatenströme werden jeder für sich mit einem Modulationsverfahren, wie z. B. der Quadraturamplitudenmodulation (QAM), mit geringer Bandbreite moduliert und auf eine Trägerfrequenz aufgebracht. Diese werden im Weiteren als modulierte Trägersignale bezeichnet. Die modulierten Trägersignale der einzelnen Teildatenströme werden zu einem Sendesignal addiert, wobei die modulierten Trägersignale wegen der Orthogonalität der Trägerfunktion orthogonal zueinander stehen. Während im Downlink (d.h. die Kommunikationsverbindung von der Basisstation zum Mobilfunkendgerät) OFDM direkt eingesetzt wird, kommt im Uplink (d.h. die Kommunikationsverbindung vom Mobilfunkendgerät zur Basisstation) und Sidelink (d.h. die D2D Kommunikationsverbindung zwischen zwei Mobilfunkendgeräten) eine Variante von OFDM zum Einsatz. Bei dieser Variante von OFDM werden die Datensignale vor der Modulationsstufe noch durch eine FFT-Operation vorcodiert. Die FFT-codierten Abtastwerte werden wie im klassischen OFDM digital moduliert und auf die einzelnen OFDM-Unterträger aufgeprägt. Diese Variante von OFDM wird auch als SC-FDMA (Single Carrier Frequency Division Multiple Access) bezeichnet und führt im erzeugten Funksignal zu einem geringeren PAPR (Peak to Average Power Ratio), d.h. es entstehen weniger stark ausgeprägte Leistungsspitzen im Zeitbereichssignal. Dies ermöglicht eine Realisierung der Sendestufen in den Mobilfunkendgeräten mit kostengünstigeren Leistungsverstärkern.

Für die Übertragung wird meist ein Mehrantennensystem (MIMO = Multiple Input Multiple Output) verwendet, bei dem das Signal von z. B. zwei oder vier Antennen in der Basisstation an z. B. zwei oder vier Antennen im Mobilfunkendgerät gesendet wird. Dabei können auch verschiedene Nutzinformation bzw. Datenteilströme auf Übertragungskanälen mit der gleichen Frequenz aber über verschiedene Antennen übertragen werden. Um den Datenstrom zu decodieren und wieder zusammenzusetzen, müssen die einzelnen Sendekanäle unterscheidbar sein, was durch die Zuweisung unterschiedlicher Ausbreitungscharakteristika an den jeweiligen Antennen erreicht wird. Durch die unterschiedlichen Ausbreitungswege zwischen den verschiedenen Basisstations- und Funkgeräteantennen wird zusätzlich eine Auslöschung eines Sendesignals durch Reflexionen und dergleichen vermindert. Dies ermöglicht eine höhere Datenrate bei gleichzeitig besserer Übertragungsqualität. Auch wenn im Fall einer D2D Kommunikation im LTE-Sidelink nur eine einzelne Sendeantenne am Mobilfunkendgerät vorgesehen ist, kann das übertragene Signal am empfangenden Mobilfunkendgerät wiederum mit z.B. zwei oder vier Antennen empfangen werden. Dadurch ergibt sich für den Fall des LTE-Sidelinks ein SIMO System (Single Input Multiple Output), welches einen Spezialfall eines allgemeinen MIMO Systems darstellt.

Es sei angenommen, dass das Testgerät 20 dazu ausgebildet ist, neben der D2D Kommunikation auch die Mobilfunkeigenschaften eines Mobilfunkendgerätes 20 testen kann. Ein solches Testgerät 20 ist im Prinzip ein Funkmessplatz, welcher eine modifizierte kleine Basisstation eines Mobilfunknetzes darstellt. Das Testgerät 20 kann je nach gewünschtem Mobilfunkstandard ein spezifisches Testnetz emulieren, wie z.B. ein GSM-, UMTS- oder LTE-Netz, sodass der Test sehr realitätsnah durchgeführt werden kann. Diese Art der Testgeräte 20 wird verwendet, um die HF-Eigenschaften von Mobilfunkendgeräten zu testen, wie etwa die Sende- und Empfangsfähigkeit, Datendurchsatz, Datenvolumen, usw. Zum Testen der reinen Mobilfunkeigenschaften des Mobilfunkendgerätes 14 ist es erforderlich, dass das Testgerät 20 über eine Luftschnittstelle mit dem zu testenden Mobilfunkendgerät 14 gekoppelt wird. In diesem Testmodus erzeugt das erfindungsgemäße Testgerät 20 dann ein HF-Testfeld, in welchem das Mobilfunkendgerät 3 positioniert und getestet wird.

In einer bevorzugten Ausgestaltung weist das Testgerät 20 eine HF-Mess-/Auswerteeinrichtung auf, die dazu ausgebildet ist, HF-Eigenschaften des über die Kommunikationsschnittstelle mit dem Testgerät 20 gekoppelten Mobilfunkendgerätes 14 zu testen.

Das erfindungsgemäße Testgerät 20 kann vorzugsweise eine Vielzahl verschiedener Protokolle von Mobilfunkstandards, wie etwa GSM, CDMA (W-CDMA, CDMA 2000, etc.), UMTS, LTE, etc., unterstützen.

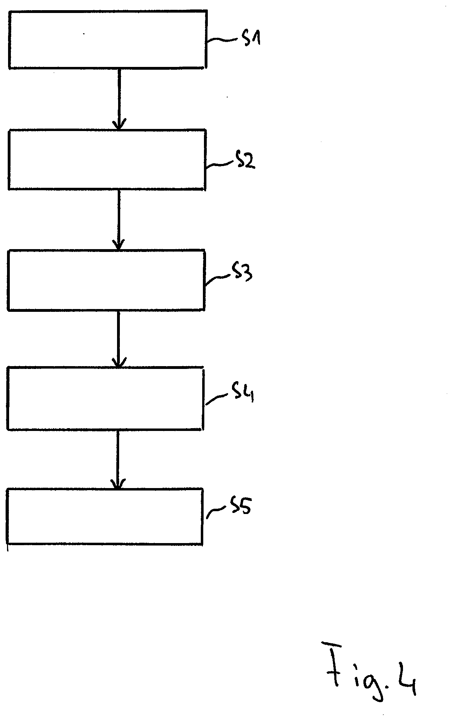

Fig. 4 zeigt anhand eines Ablaufdiagramms den Ablauf eines erfindungsgemäßen Testverfahrens zum Testen der D2D-Kommunikationsfähigkeit eines Mobilfunkendgeräts mittels eines erfindungsgemäßen HF-Testgerätes, wie es beispielsweise anhand der Figuren 2 und 3 erläutert wurde.

In einem ersten Schritt S1 wird ein erster Sendekanal für eine D2D-Kommunikationsverbindung (in LTE: Sidelink) emuliert. Dabei wird anhand eines ersten vorgegebenen Kanalmodells ein dem ersten Sendekanal spezifisches erstes Basisband-Datensignal erzeugt.

In zumindest einem weiteren Schritt S2 wird ein zweiter Sendekanal für eine D2D-Kommunikationsverbindung emuliert, bei dem anhand eines zweiten vorgegebenen Kanalmodells ein dem zweiten Sendekanal spezifisches zweites Basisband-Datensignal erzeugt wird.

In den Schritten S1 und S2 werden die jeweiligen Sendekanal-spezifischen Basisband-Datensignale durch komplexe Multiplikation des zu sendenden Datensignals mit den Kanalkoeffizienten des Kanalmodells berechnet.

In zumindest einem nachfolgenden Schritt S3 werden die so erzeugten ersten und zweiten Basisband-Datensignale miteinander verknüpft, beispielsweise durch Addition überlagert.

Anschließend wird im Schritt S4 das so erzeugte verknüpfte Basisband-Datensignal vom Frequenzbereich in den Zeitbereich transformiert, um auf diese Weise ein Empfangssignal für das zu testende Mobilfunkendgerät 14 zu erzeugen.

Schließlich wird im Schritt S5 das so erzeugte Empfangssignal an das zu testende Mobilfunkendgerät 14 gesendet. Das Mobilfunkendgerät 14 kann dann auf dessen D2D-Eigenschaften getestet werden.

In der vorliegenden Beschreibung wird der Ausdruck "Mobilfunkendgerät" verwendet, wobei darunter sämtliche Geräte verstanden werden dürfen, welche eine integrierte Mobilfunkfunktionalität besitzen und zwar unabhängig davon, ob in diesen Geräten weitere Funktionalitäten integriert sind. So seien beispielsweise unter Mobilfunkendgeräten neben herkömmlichen Mobilfunktelefonen, Smartphones, PDAs, Tablet-PCs beispielsweise auch mobile Computer, Navigationsgeräte, PDAs (Personal Digital Assistant), einem Fahrzeug mit einer Mobilfunkausstattung und dergleichen zu verstehen. Insbesondere soll der Begriff Mobilfunkendgerät im Kontext der vorliegenden Erfindung ausdrücklich für jede funkbasierten mobile oder drahtlose D2D-Kommunikationsvorrichtung verstanden werden.

Schließlich seien auch die angegebenen Zahlenangaben lediglich illustrativ zu verstehen und sollen die Erfindung nicht dahingehend einschränken.

### Bezugszeichenliste

- 10: Mobilfunkzelle
- 11: Basisstation, eNodeB
- 12, 13, 14: Mobilfunkendgeräte, User Equipment (UE)
- 14: zu testendes Mobilfunkendgerät, Device under Test (DUT)
- 15, 16: Sidelinks für D2D Kommunikation
- 17: Konfiguration der sendenden Mobilfunkendgeräte
- 18: Konfiguration des empfangenen Mobilfunkendgeräts

- 20: Testgerät
- 21: Emulationseinrichtung
- 22: Verknüpfungseinrichtung
- 23: Umwandlungseinrichtung
- 24: Kommunikationsschnittstelle
- 26, 26a, 26b: Basisbanddatensignale
- 27: verknüpfte Basisbanddatensignale
- 28: Empfangssignal
- 29: festverdrahtete Koaxialverbindung

- 30, 31: Sendekanäle
- 32, 33: Signalgenerator
- 34, 35: Kanalsimulator
- 36, 37: Datensignale
- 38, 39: Kanalverzerrung, Kanalkoeffizienten
- 40, 41: Multiplikationseinrichtungen

- S1 - S5: Verfahrensschritte

## Patentansprüche

1. HF-Testgerät (20) zum Testen eines D2D-fähigen Mobilfunkendgerätes (14), mit einer Emulationseinrichtung (21) zur Emulation der D2D-Funktion mehrerer Mobilfunkendgeräte (12, 13), welche dazu ausgebildet ist, eine der Anzahl der Mobilfunkendgeräte (12, 13) entsprechende Anzahl an voneinander unabhängigen Sendekanälen (30, 31) zu emulieren, indem für jeden Sendekanal (30, 31) anhand eines vorgegebenen Kanalmodells ein dem jeweiligen Sendekanal (30, 31) spezifisches Basisband-Datensignal (26, 26a, 26b) erzeugt wird, einer Verknüpfungseinrichtung (22), die dazu ausgebildet ist, die erzeugten Basisband-Datensignale (26, 26a, 26b) miteinander zu verknüpfen, einer Umwandlungseinrichtung (23), die dazu ausgebildet ist, ein Empfangssignal (28) für ein zu testendes Mobilfunkendgerät (14) zu erzeugen, indem das verknüpfte Basisband-Datensignal (27) aus dem Frequenzbereich in den Zeitbereich umgewandelt wird, einer Kommunikationsschnittstelle (24), über welche das HF-Testgerät (20) mit dem zu testenden Mobilfunkendgerät (14) koppelbar ist und über welche das Empfangssignal (28) an das zu testende Mobilfunkendgerät (14) aussendbar ist.

2. Testgerät nach Anspruch 1,
**dadurch gekennzeichnet,**
**dass** die Emulationseinrichtung (21) einen Signalgenerator (32, 33) und einen Kanalsimulator (34, 35) aufweist,
- wobei der Signalgenerator (32, 33) dazu ausgebildet ist, für jeden Sendekanal (30, 31) ein Datensignal (36, 37) zu erzeugen,
- wobei der Kanalsimulator (34, 35) dazu ausgebildet ist, jedem Datensignal (36, 37) eines jeweiligen Sendekanals (30, 31) eine vorgegebene, dem jeweiligen Sendekanal (30, 31) spezifische Kanalverzerrung (38, 39) aufzuprägen.

3. Testgerät nach Anspruch 2,
**dadurch gekennzeichnet,**
**dass** der Signalgenerator (32, 33) als Protokolltestgerät ausgebildet ist, welcher eine einem vorgegebenen Protokollstapel entsprechende Codierung der zu sendenden Daten vornimmt.

4. Testgerät nach einem der Ansprüche 2 oder 3,
**dadurch gekennzeichnet,**
**dass** der Kanalsimulator (34, 35) dazu ausgelegt ist, die Eigenschaften eines Sendekanals (30, 31) nachzubilden, indem er zur Erzeugung des Sendekanal-spezifischen Basisband-Datensignals (26, 26a, 26b) das entsprechende zu sendende Datensignal (36, 37) entsprechend dem vorgegebenen Kanalmodell verändert.

5. Testgerät nach einem der Ansprüche 2 bis 4,
**dadurch gekennzeichnet,**
**dass** der Kanalsimulator (34, 35) zur Erzeugung des Sendekanal-spezifischen Basisband-Datensignals (26, 26a, 26b) konstante Filterkoeffizienten (38, 39) verwendet.

6. Testgerät nach einem der Ansprüche 2 bis 4,
**dadurch gekennzeichnet,**
**dass** der Kanalsimulator (34, 35) zur Erzeugung des Sendekanal-spezifischen Basisband-Datensignals (26, 26a, 26b) variable Filterkoeffizienten (38, 39) verwendet.

7. Testgerät nach einem der Ansprüche 2 bis 6,
**dadurch gekennzeichnet,**
**dass** der Kanalsimulator (34, 35) dazu ausgebildet ist, zur Simulation einer vorgegebenen Kanalverzerrung (38, 39) für jeden Sendekanal (30, 31) unterschiedliche Kanalkoeffizienten (38, 39) heranzuziehen.

8. Testgerät nach einem der vorstehenden Ansprüche,
**dadurch gekennzeichnet,**
**dass** die Emulationseinrichtung (21) dazu ausgebildet ist, das Sendekanal-spezifische Basisband-Datensignal (26, 26a, 26b) durch komplexe Multiplikation des zu sendenden Datensignals (36, 37) mit den Filterkoeffizienten (38, 39) des Kanalmodells zu berechnen.

9. Testgerät nach einem der vorstehenden Ansprüche,
**dadurch gekennzeichnet,**
**dass** die Emulationseinrichtung (21) dazu ausgebildet ist,
- zu übertragende Daten bereitzustellen,
- den zu übertragenden Daten eine Mehrzahl an Trägerfrequenzen und Kodierungsparameter je Sendekanal (30, 31) zuzuweisen,
- eine Mehrzahl von modulierten Trägerdatensignalen (36, 37) entsprechend den zugewiesenen Trägerfrequenzen und Kodierungsparametern zu erzeugen, und
- zumindest eines der modulierten Trägerdatensignale (36, 37) mittels eines vorgegebenen frequenzselektiven Kanalmodells zu verzerren.

10. Testgerät nach einem der vorstehenden Ansprüche,
**dadurch gekennzeichnet,**
**dass** die Emulationseinrichtung (21) dazu ausgebildet ist, verschiedene Testszenarien nachzubilden.

11. Testgerät nach einem der vorstehenden Ansprüche,
**dadurch gekennzeichnet,**
**dass** die Umwandlungseinrichtung (23) dazu ausgebildet ist, zur Bildung eines Empfangssignals (28) für das zu testende Mobilfunkendgerät (14) an dem verknüpften Basisband-Datensignal (27) eine IFFT-Transformation durchzuführen.

12. Testgerät nach einem der vorstehenden Ansprüche,
**dadurch gekennzeichnet,**
**dass** die Kommunikationsschnittstelle (24) dazu ausgebildet ist, eine festverdrahtete Kommunikationsverbindung zu dem zu testenden Mobilfunkendgerät (14) aufzubauen.

13. Verfahren zum Testen eines Mobilfunkendgerätes (14) mittels eines Testgeräts (20), insbesondere mittels eines Testgeräts (20) nach einem der vorherigen Patentansprüche, mit den Schritten:
Emulieren eines ersten Sendekanals (30) für eine D2D-Kommunikationsverbindung durch Erzeugen eines dem ersten Sendekanal (30) spezifischen ersten Basisband-Datensignals (26; 26a) anhand eines ersten vorgegebenen Kanalmodells;
Emulieren mindestens eines zweiten, von dem ersten Sendekanal (30) verschiedenen Sendekanals (31) für eine D2D-Kommunikationsverbindung durch Erzeugen eines dem zweiten Sendekanal (31) spezifischen zweiten Basisband-Datensignals (26; 26b) anhand eines zweiten vorgegebenen Kanalmodells;
Miteinander Verknüpfen der erzeugten ersten und zweiten Basisband-Datensignale (26; 26a, 26b);
Umwandeln des verknüpften Basisband-Datensignals (27) aus dem Frequenzbereich in den Zeitbereich zur Erzeugung eines Empfangssignals (28) für ein zu testendes Mobilfunkendgerät (14);
Aussenden des erzeugten Empfangssignals (28) an das zu testende Mobilfunkendgerät (14).

14. Verfahren nach Anspruch 13,
**dadurch gekennzeichnet,**
**dass** im Schritt des Emulierens des ersten und/oder zweiten Sendekanals (30, 31) das Sendekanal-spezifische Basisband-Datensignal (26; 26a, 26b) durch komplexe Multiplikation des zu sendenden Datensignals (36, 37) mit den Kanalkoeffizienten (38, 39) des Kanalmodells berechnet wird.

15. Verfahren nach Anspruch 13 oder 14,
**dadurch gekennzeichnet,**
**dass** die Schritte des Emulierens des ersten und/oder zweiten Sendekanals enthalten:
- Bereitstellen von zu übertragenden Daten;
- Zuweisen einer Mehrzahl an Trägerfrequenzen und Kodierungsparametern je Sendekanal (30, 31) zu den zu übertragenden Daten;
- Erzeugen einer Mehrzahl von modulierten Trägerdatensignalen (36, 37) entsprechend den zugewiesenen Trägerfrequenzen und Kodierungsparametern;
- Verzerren zumindest eines der modulierten Trägerdatensignale (36, 37) mittels eines vorgegebenen frequenzselektiven Kanalmodells.

## Claims

1. RF testing equipment (20) for testing a D2D-enabled mobile communications terminal (14), having an emulation device (21) for emulating the D2D function of a plurality of mobile communications terminals (12, 13), which is designed to emulate a number of mutually independent transmission channels (30, 31) corresponding to the number of mobile communications terminals (12, 13) in that, for each transmission channel (30, 31), a baseband data signal (26, 26a, 26b) specific to the respective transmission channel (30, 31) is generated with the aid of a predefined channel model,
a linking device (22) designed to link together the generated baseband data signals (26, 26a, 26b),
a conversion device (23) designed to generate a reception signal (28) for a mobile communications terminal (14) to be tested in that the linked baseband data signal (27) is converted from the frequency domain into the time domain,
a communications interface (24), by means of which the RF testing equipment (20) can be coupled to the mobile communications terminal (14) to be tested and by means of which the reception signal (28) can be emitted to the mobile communications terminal (14) to be tested.

2. Testing equipment as claimed in claim 1, **characterised in that** the emulation device (21) comprises a signal generator (32, 33) and a channel simulator (34, 35),
- wherein the signal generator (32, 33) is designed to generate a data signal (36, 37) for each transmission channel (30, 31),
- wherein the channel simulator (34, 35) is designed to impress a predefined channel distortion (38, 39) specific to the respective transmission channel (30, 31) on each data signal (36, 37) of a respective transmission channel (30, 31).

3. Testing equipment as claimed in claim 2, **characterised in that** the signal generator (32, 33) is designed as protocol testing equipment which carries out encoding, corresponding to a predefined protocol stack, of the data to be transmitted.

4. Testing equipment as claimed in any one of claims 2 or 3, **characterised in that** the channel simulator (34, 35) is designed to imitate the properties of a transmission channel (30, 31) **in that**, in order to generate the transmission channel-specific baseband data signal (26, 26a, 26b), said channel simulator changes the corresponding data signal (36, 37) to be transmitted corresponding to the predefined channel model.

5. Testing equipment as claimed in any one of claims 2 to 4, **characterised in that** the channel simulator (34, 35) uses constant filter coefficients (38, 39) in order to generate the transmission channel-specific baseband data signal (26, 26a, 26b).

6. Testing equipment as claimed in any one of claims 2 to 4, **characterised in that** the channel simulator (34, 35) uses variable filter coefficients (38, 39) in order to generate the transmission channel-specific baseband data signal (26, 26a, 26b).

7. Testing equipment as claimed in any one of claims 2 to 6, **characterised in that** the channel simulator (34, 35) is designed to employ different channel coefficients (38, 39) in order to simulate a predefined channel distortion (38, 39) for each transmission channel (30, 31).

8. Testing equipment as claimed in any one of the preceding claims, **characterised in that** the emulation device (21) is designed to calculate the transmission channel-specific baseband data signal (26, 26a, 26b) by complex multiplication of the data signal (36, 37) to be transmitted by the filter coefficients (38, 39) of the channel model.

9. Testing equipment as claimed in any one of the preceding claims, **characterised in that** the emulation device (21) is designed
- to provide data to be transmitted,
- to assign to the data to be transmitted a plurality of carrier frequencies and encoding parameters per transmission channel (30, 31),
- to generate a plurality of modulated carrier data signals (36, 37) corresponding to the assigned carrier frequencies and encoding parameters, and
- to distort at least one of the modulated carrier data signals (36, 37) by means of a predefined frequency-selective channel model.

10. Testing equipment as claimed in any one of the preceding claims, **characterised in that** the emulation device (21) is designed to imitate different testing scenarios.

11. Testing equipment as claimed in any one of the preceding claims, **characterised in that** the conversion device (23) is designed to carry out an IFFT transformation on the linked baseband data signal (27) in order to form a reception signal (28) for the mobile communications terminal (14) to be tested.

12. Testing equipment as claimed in any one of the preceding claims, **characterised in that** the communications interface (24) is designed to establish a hard-wired communications connection to the mobile communications terminal (14) to be tested.

13. Method for testing a mobile communications terminal (14) by means of testing equipment (20), in particular by means of testing equipment (20) as claimed in any one of the preceding claims, comprising the steps of:
emulating a first transmission channel (30) for a D2D communications connection by generating a first baseband data signal (26; 26a) specific to the first transmission channel (30) with the aid of a first predefined channel model;
emulating at least a second transmission channel (31), different from the first transmission channel (30), for a D2D communications connection by generating a second baseband data signal (26; 26b) specific to the second transmission channel (31) with the aid of a second predefined channel model;
linking together the generated first and second baseband data signals (26; 26a, 26b);
converting the linked baseband data signal (27) from the frequency domain into the time domain in order to generate a reception signal (28) for a mobile communications terminal (14) to be tested;
emitting the generated reception signal (28) to the mobile communications terminal (14) to be tested.

14. Method as claimed in claim 13, **characterised in that**, in the step of emulating the first and/or second transmission channel (30, 31), the transmission channel-specific baseband data signal (26; 26a, 26b) is calculated by complex multiplication of the data signal (36, 37) to be transmitted by the channel coefficients (38, 39) of the channel model.

15. Method as claimed in claim 13 or 14, **characterised in that** the steps of emulating the first and/or second transmission channel include:
- providing data to be transmitted;
- assigning to the data to be transmitted a plurality of carrier frequencies and encoding parameters per transmission channel (30, 31);
- generating a plurality of modulated carrier data signals (36, 37) corresponding to the assigned carrier frequencies and encoding parameters;
- distorting at least one of the modulated carrier data signals (36, 37) by means of a predefined frequency-selective channel model.

## Revendications

1. Dispositif de test HF (20) pour tester un terminal radio mobile D2D (14), comportant :
un moyen d'émulation (21) pour émuler la fonction D2D de plusieurs terminaux radio mobiles (12, 13), qui sont configurés pour émuler un nombre correspondant au nombre de terminaux radio mobiles (12, 13) sur des canaux d'émission (30, 31) indépendants les uns des autres, en générant pour chaque canal d'émission (30, 31) à l'aide d'un modèle de canal prédéfini un signal de données de bande de base (26, 26a, 26b) spécifique au canal d'émission respectif (30, 31),
un moyen de combinaison (22), qui est configuré pour combiner les signaux de données de bande de base générés (26, 26a, 26b) les uns avec les autres,
un moyen de conversion (23), qui est configuré pour générer un signal de réception (28) pour un terminal radio mobile à tester (14), en convertissant le signal de données de bande de base combiné (27) à partir de la gamme de fréquences dans la plage de temporisation,
une interface de communication (24), qui permet de coupler le dispositif de test HF (20) avec le terminal radio mobile à tester (14) et qui permet d'envoyer le signal de réception (28) au terminal radio mobile à tester (14).

2. Dispositif de test selon la revendication 1, **caractérisé en ce que** le moyen d'émulation (21) présente un générateur de signal (32, 33) et un simulateur de canal (34, 35),
- dans lequel le générateur de signal (32, 33) est configuré pour générer un signal de données (36, 37) pour chaque canal d'émission (30, 31),
- dans lequel le simulateur de canal (34, 35) est configuré pour marquer chaque signal de données (36, 37) d'un canal d'émission respectif (30, 31) avec une distorsion de canal prédéfinie (38, 39) spécifique au canal d'émission respectif (30, 31).

3. Dispositif de test selon la revendication 2, **caractérisé en ce que** le générateur de signal (32, 33) est configuré sous la forme d'un dispositif de test de protocoles qui procède à un codage des données à envoyer correspondant à une pile de protocoles prédéfinis.

4. Dispositif de test selon une des revendications 2 ou 3, **caractérisé en ce que** le simulateur de canal (34, 35) est conçu pour reproduire les propriétés d'un canal d'émission (30, 31), en modifiant le signal de données correspondant à envoyer (36, 37) en fonction du modèle de canal prédéfini, afin de générer le signal de données de bande de base (26, 26a, 26b) spécifique au canal d'émission.

5. Dispositif de test selon une des revendications 2 à 4, **caractérisé en ce que** le simulateur de canal (34, 35) utilise des coefficients de filtrage (38, 39) constants pour générer le signal de données de bande de base (26, 26a, 26b) spécifique au canal d'émission.

6. Dispositif de test selon une des revendications 2 à 4, **caractérisé en ce que** le simulateur de canal (34, 35) utilise des coefficients de filtrage (38, 39) variables pour générer le signal de données de bande de base (26, 26a, 26b) spécifique au canal d'émission.

7. Dispositif de test selon une des revendications 2 à 6, **caractérisé en ce que** le simulateur de canal (34, 35) est configuré pour utiliser des coefficients de canal (38, 39) différents pour simuler une distorsion de canal prédéfinie (38, 39) pour chaque canal d'émission (30, 31).

8. Dispositif de test selon une des revendications précédentes, **caractérisé en ce que** le moyen d'émulation (21) est configuré pour calculer le signal de données de bande de base (26, 26a, 26b) spécifique au canal d'émission par une multiplication complexe du signal de données à envoyer (36, 37) avec les coefficients de filtrage (38, 39) du modèle de canal.

9. Dispositif de test selon une des revendications précédentes, **caractérisé en ce que** le moyen d'émulation (21) est configuré pour
- fournir des données à transmettre,
- affecter aux données à transmettre une pluralité de fréquences porteuses et de paramètres de codage par canal d'émission (30, 31),
- générer une pluralité de signaux de données porteurs modulés (36, 37) en fonction des fréquences porteuses et des paramètres de codage affecté(e)s, et
- distordre au moins un des signaux de données porteurs modulés (36, 37) à l'aide d'un modèle de canal prédéfini à sélection de fréquences.

10. Dispositif de test selon une des revendications précédentes, **caractérisé en ce que** le moyen d'émulation (21) est configuré pour reproduire différents scénarii de test.

11. Dispositif de test selon une des revendications précédentes, **caractérisé en ce que** le moyen de conversion (23) est configuré pour réaliser une transformation IFFT, afin de former un signal de réception (28) pour le terminal radio mobile à tester (14) au niveau du signal de données de bande de base combiné (27).

12. Dispositif de test selon une des revendications précédentes, **caractérisé en ce que** l'interface de communication (24) est configurée pour établir une liaison de communication câblée vers le terminal radio mobile à tester (14).

13. Procédé de test d'un terminal radio mobile (14) à l'aide d'un dispositif de test (20), en particulier à l'aide d'un dispositif de test (20) selon une des revendications précédentes, comprenant les étapes consistant à :
émuler un premier canal d'émission (30) pour une liaison de communication D2D en générant un premier signal de données de bande de base (26 ; 26a) spécifique au premier canal d'émission (30) à l'aide d'un premier modèle de canal prédéfini ;
émuler au moins un second canal d'émission (31) différent du premier canal d'émission (30) pour une liaison de communication D2D en générant un second signal de données de bande de base (26 ; 26b) spécifique au second canal d'émission (31) à l'aide d'un second modèle de canal prédéfini ;
combiner les premier et second signaux de données de bande de base générés (26 ; 26a, 26b) l'un avec l'autre ;
convertir le signal de données de bande de base combiné (27) à partir de la gamme de fréquences dans la plage de temporisation afin de générer un signal de réception (28) pour un terminal radio mobile à tester (14) ;
envoyer le signal de réception généré (28) au terminal radio mobile à tester (14).

14. Procédé selon la revendication 13, **caractérisé en ce**
**que**, dans l'étape consistant à émuler le premier et/ou le second canal d'émission (30, 31), le signal de données de bande de base (26 ; 26a, 26b) spécifique au canal d'émission est calculé par une multiplication complexe du signal de données à envoyer (36, 37) avec les coefficients de canal (38, 39) du modèle de canal.

15. Procédé selon la revendication 13 ou 14, **caractérisé en ce que** les étapes consistant à émuler le premier et/ou le second canal d'émission consistent à :
- fournir des données à transmettre ;
- affecter aux données à transmettre une pluralité de fréquences porteuses et de paramètres de codage par canal d'émission (30, 31) ;
- générer une pluralité de signaux de données porteurs modulés (36, 37) en fonction des fréquences porteuses et des paramètres de codage affecté(e)s ;
- distordre au moins un des signaux de données porteurs modulés (36, 37) à l'aide d'un modèle de canal prédéfini à sélection de fréquences.
